Europäisches Patentamt

European Patent Office

Office européen des brevets

(19)

(11) **EP 1 355 533 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.[7]: **A21C 1/06**

(86) Internationale Anmeldenummer:
**PCT/EP2001/009851**

(21) Anmeldenummer: **01965220.5**

(22) Anmeldetag: **27.08.2001**

(87) Internationale Veröffentlichungsnummer:
**WO 2002/017726 (07.03.2002 Gazette 2002/10)**

(54) **REAKTOR ZUM KONTINUIERLICHEN BEARBEITEN EINES PRODUKTGEMISCHES SOWIE VERFAHREN ZU SEINEM BETRIEB**

REACTOR FOR CONTINUOUS PROCESSING OF A PRODUCT MIXTURE AND OPERATIONAL METHOD THEREFOR

REACTEUR DE TRAITEMENT EN CONTINU D'UN MELANGE DE PRODUITS, ET SON PROCEDE DE FONCTIONNEMENT

(84) Benannte Vertragsstaaten:
**AT BE CH CY DE DK ES FI FR GB GR IE IT LI LU MC NL PT SE TR**

(30) Priorität: **26.08.2000 DE 10041977**

(43) Veröffentlichungstag der Anmeldung:
**29.10.2003 Patentblatt 2003/44**

(73) Patentinhaber: **ISMAR MASCHINEN GMBH 50668 Köln (DE)**

(72) Erfinder: **ISMAR, Thomas, Theodor 50668 Köln (DE)**

(74) Vertreter: **Knoblauch, Andreas Patentanwälte Dr. Knoblauch Schlosserstrasse 23 60322 Frankfurt/Main (DE)**

(56) Entgegenhaltungen:
**US-A- 2 931 320       US-A- 3 030 898**
**US-A- 3 406 643       US-A- 3 910 177**

**Beschreibung**

Die Erfindung betrifft ein Verfahren zum Betreiben eines Reaktors zum kontinuierlichen Bearbeiten eines Produktgemisches, insbesondere eines Teiges oder eines Getreidemahlerzeugnis-Wasser-Gemisches, sowie einen Reaktor gemäß dem Oberbegriff des Patentanspruchs 3 und eine Produkt linie zum kontinuierlichen Herstellen eines Produkt gemisches. Derartige Reaktoren und Verfahren zu ihrem Betrieb sind im Stand der Technik grundsätzlich bekannt.

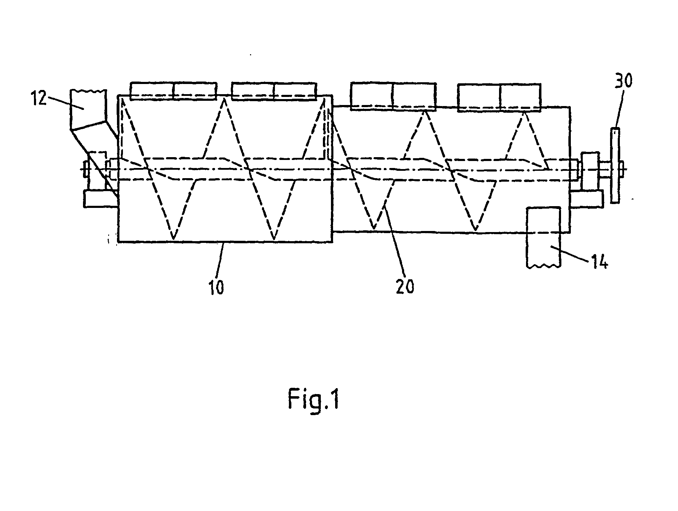

Fig. 1 zeigt einen solchen bekannten Reaktor. Er umfaßt ein Gehäuse 10 mit einem Einlaß 12 und einem Auslaß 14 und einer in dem Gehäuse 10 drehbar gelagerten Förderschnecke 20. Diese Förderschnecke 20 wird z.B. von einem Motor - hier nicht gezeigt - über einen Riemen oder Kettenantrieb 30 angetrieben und dient dann üblicherweise zum Herstellen des Produktgemisches. Für die Herstellung des Produktgemisches werden dessen einzelne Komponenten dem Reaktor über seinen Einlaß gleichzeitig in einem gewünschten Mengenverhältnis zugeführt und durch die Rotation der Förderschnecke 20 miteinander vermischt. Dabei erfolgt gleichzeitig ein Vorschub, so daß am Auslaß des Reaktors das fertig hergestellte Produktgemisch austritt. Zum Erzielen einer guten Durchmischung ist es erforderlich, daß die Drehgeschwindigkeit der Förderschnecke nicht zu gering ist, so daß insbesondere eine Traktion der Komponenten oder des entstehenden Produktgemisches an den Blättern der Förderschnecke 20 gewährleistet ist.

Diese herkömmliche Betriebsweise der Reaktoren gestattet aufgrund ihrer starken Mischfunktion keine Verwendung dieser Reaktoren zum Fermentieren der Produktgemische.

Bestimmte Produktgemische, wie z.B. Sauerteig, Weizenvorteig oder Backwarenteig, müssen am Ende ihrer Herstellung, aber vor ihrer Weiterverarbeitung, eine vorbestimmte Zeit ruhen, d.h. fermentieren. Während dieser Fermentationszeit - sie beträgt je nach Teig zwischen 60 und 600 Minuten - sollen diese Produktgemische möglichst wenig bewegt werden, insbesondere sollen sie nicht gerührt oder erneut durchmischt werden, um einen angestrebten Stoffwechsel von Mikroorganismen in dem Produktgemisch nicht zu stören und Abweichungen von der gewünschten Struktur zu vermeiden. Der Stoffwechsel führt zunächst zur Bildung von Gas in dem Produktgemisch, was wiederum zur Bildung von gewünschten Stoffwechselprodukten, wie z.B. Säure und Alkoholvorläufern, führt. Die Gasbildung in dem Produktgemisch bewirkt weiterhin eine Vergrößerung bis zur Verdoppelung des Volumens des Produktgemisches während seiner Fermentationszeit.

Die US 3,030,898 beschreibt eine Teigknetmaschine, welche die innere Struktur eines Teiges verbessern soll. Es ist eine Aufgabe dieser Teigknetmaschine, einheitliche und verbesserte Brotqualitäten zur Verfügung zu stellen. Dies soll dadurch erreicht werden, dass der Teig zunächst durch einen Mixer vermengt und geknetet wird, wodurch sich Fermentationsgase aus dem Teiggemisch herauslösen.

Neben dem Kneten des Teiges wird vorgeschlagen, dass der Teig entlang einer Transportstrecke transportiert wird. Während des Transportes wird der Teig andauernd durch Schneideblätter durchtrennt und wieder verknetet. Die Länge der Transportstrecke ist so gewählt, dass das Entgasen am Ende des Transportes abgeschlossen sein soll.

Ausgehend von diesem Stand der Technik ist es die Aufgabe der vorliegenden Erfindung, einen Reaktor zum kontinuierlichen Bearbeiten eines Produktgemisches sowie ein Verfahren zu seinem Betrieb derart weiterzubilden, daß der Reaktor zur Fermentierung eines Produktgemisches verwendet werden kann.

Diese Aufgabe wird gemäß dem in Patentanspruch 1 beanspruchten Verfahren dadurch gelöst, daß die Drehgeschwindigkeit der Förderschnecke (20) so eingestellt wird, daß die Verweildauer eines Partikels des Produktgemisches in dem Reaktor während der er von dem Einlaß (12) zu dem Auslaß (14) vorgeschoben wird, zumindest näherungsweise einer vorbestimmten Fermentationszeit des Produktgemisches entspricht, wobei die Drehgeschwindigkeit der Förderschnecke (20) entsprechend dem Minimum zweier Drehgeschwindigkeiten gemäß folgender Formel eingestellt wird:

$$w = min \{ w1, w2 \}$$

wobei w1 der Drehgeschwindigkeit der Förderschnecke (20) nach Maßgabe durch die vorbestimmte Fermentationszeit des Produktgemisches entspricht; und w2 einer Drehgeschwindigkeit der Förderschnecke (20) entspricht, welche so gering ist, daß eine Traktion des Produktgemisches an den Blättern der Förderschnecke (20) vernachlässigbar ist und im wesentlichen nur der gewünschte Vorschub des Produktgemisches erzielt wird.

Gemäß einem ersten Ausführungsbeispiel der Erfindung wird dem Reaktor über den Einlaß in Abhängigkeit der eingestellten Drehgeschwindigkeit der Förderschnecke vorteilhafterweise nur ein derartiges Volumen des Produktgemisches pro Zeiteinheit zugeführt, welches näherungsweise der Hälfte des von der Förderschnecke maximal pro Zeiteinheit vorschiebbaren Volumens entspricht. Auf diese Weise wird sichergestellt, daß während der Fermentationszeit in dem Gehäuse noch genügend Volumen zur Ausdehnung des Produktgemisches vorhanden ist. Am Ende der Fermenatationszeit ist das Gehäuse in der Nähe des Auslasses i.d. R. vollständig mit dem aufgegangenen Produktgemisch ausgefüllt.

Es ist vorteilhaft, wenn die Drehgeschwindigkeit ω der Förderschnecke entsprechend dem Minimum zweier Drehgeschwindigkeiten gemäß folgender Formel eingestellt wird:

$$\omega = \min \{\omega1, \omega2\}$$

wobei

$\omega1$ der Drehgeschwindigkeit der Förderschnecke nach Maßgabe durch die vorbestimmte Fermentationszeit des Produktgemisches entspricht; und

$\omega2$ einer Drehgeschwindigkeit der Förderschnecke entspricht, welche so gering ist, daß eine Traktion des Produktgemisches an den Blättern der Förderschnecke vernachlässigbar ist und im wesentlichen nur der gewünschte Vorschub des Produktgemisches erzielt wird.

Damit wird die Drehgeschwindigkeit. $\omega$ der Förderschnecke so gering eingestellt, daß das Produktgemisch, welches auch während der Fermentationszeit noch als eine, wenn auch viskose, Flüssigkeit anzusehen ist, stets am Boden des Gehäuses des Reaktors verbleibt bzw. dorthin zurücksinkt. So wird sichergestellt, daß das Produktgemisch während der Fermatationsphase quasi in Ruhe ist, so daß der erforderliche Stoffwechsel der Mikroorganismen stattfinden kann und die Struktur erhalten bleibt.

Die Aufgabe der Erfindung wird weiterhin durch einen Reaktor zum kontinuierlichen Bearbeiten eines Produktgemisches gemäß Patentanspruch 3 gelöst. Die Vorteile dieses Reaktors entsprechen den oben genannten Vorteilen des Verfahrens zu seinem Betrieb.

Es ist vorteilhaft, das Gehäuse zumindest abschnittweise kühlbar oder beheizbar auszubilden. Dies bietet die Möglichkeit einer externen Einflußnahme auf die Stoffwechselvorgänge in dem Produktgemisch während der Fermentationszeit.

Vorzugsweise ist das Gehäuse des Reaktors doppelwandig als Wärmetauscher ausgebildet. Die doppelwandige Ausführung bietet gegenüber der einwandigen Ausführung eine verbesserte Thermoisolierung.

Weitere vorteilhafte Ausgestaltungen der Erfindung sind Gegenstand der Unteransprüche.

Die Aufgabe der Erfindung wird weiterhin durch eine Produktionslinie gemäß Patentanspruch 7 gelöst. Der Reaktor ist als eine Komponente in die Produktionslinie integriert und z.B. einer Kneteinrichtung zum Herstellen des Produktgemisches nachgeschaltet. Dies hat den Vorteil, daß das Produktgemisch während der Fermentationszeit nicht aus der Produktionslinie entfernt werden muß, sondern dort verbleiben kann. Am Auslaß des Reaktors wird ein fertig fermentiertes Produktgemisch ausgegeben, welches unmittelbar für eine Weiterbearbeitung in der Produktionslinie geeignet ist. Die Weiterbearbeitung kann z.B. in einer maschinell durchgeführten Formgebung bestehen. Auf diese Weise entsteht eine vollständige Produktionslinie für eine kontinuierliche Teigherstellung.

Nachfolgend wird ein konkretes Ausführungsbeispiel der Erfindung unter Bezugnahme auf die beigefügte Fig. 1 detailliert beschrieben, wobei

Fig. 1    den Aufbau eines Reaktors gemäß der vorliegenden Erfindung veranschaulicht.

Der in Fig. 1 gezeigte Reaktor gemäß der vorliegenden Erfindung entspricht in seinem Aufbau dem aus dem Stand der Technik bekannten und oben beschriebenen Reaktor. Es werden deshalb nachfolgend die gleichen Bezugszeichen für einzelne Komponenten des Reaktors verwendet.

Im Unterschied zum Stand der Technik wird dieser Reaktor allerdings anders betrieben. Genauer gesagt, wird seine Förderschnecke 20 mit einer nur sehr niedrigen Drehzahl $\omega$ betrieben. Die Drehzahl $\omega$ genügt vorzugsweise der folgenden Bedingung:

$$\omega = \min \{\omega1, \omega2\}$$

wobei

$\omega1$ einer Drehgeschwindigkeit der Förderschnecke entspricht, welche sicherstellt, daß ein Partikel des Produktgemisches während einer vorbestimmten Fermentationszeit in dem Reaktor verbleibt; und

$\omega2$ einer Drehgeschwindigkeit der Förderschnecke entspricht, welche so gering ist, daß eine Traktion des Produktgemisches an den Blättern der Förderschnecke vernachlässigbar ist und im wesentlichen nur der gewünschte Vorschub des Produktgemisches erzielt wird.

Unter Berücksichtigung der Steigung der Förderschnecke 20 und der Länge des Gehäuses 10 des Reaktors läßt sich die Drehgeschwindigkeit der Förderschnecke 20 so berechnen, daß ein Partikel des Produktgemisches während der gewünschten vorbestimmten Fermentationszeit in dem Reaktor verbleibt und eine Traktion des Produktgemisches vernachlässigt werden kann. Beispielsweise liegt die Drehgeschwindigkeit der Förderschnecke 20 bei 0,04 U/min, was bedeutet, daß die Förderschnecke innerhalb von ca. 30 min eine vollständige Umdrehung durchführt. Bei entsprechender Dimension von der Steigung der Förderschnecke und der Länge des Gehäuses läßt sich bei dieser Geschwindigkeit eine Verweildauer des Produktgemisches in dem Reaktor von z.B. 120 min erreichen.

Durch die Blätter der Förderschnecke 20 ergeben sich quasi Kammern, so daß der Füllungsgrad und damit die Kapazität bei gleichbleibender Fermentierungszeit beliebig niedrig gehalten kann.

**Patentansprüche**

1.  Verfahren zum Betreiben eines Reaktors zum kontinuierlichen Bearbeiten eines Produktgemisches, insbesondere eines Teiges, wobei der Reaktor als ein Gehäuse (10) mit einem Einlaß (12) und einem Auslaß (14) und einer in dem Gehäuse (10) drehbar gelagerten Förderschnecke (20) zum Vorschieben des Produktgemisches von dem Einlaß (12) zu dem Auslaß (14) gebildet ist,

wobei die Drehgeschwindigkeit der Förderschnekke (20) so eingestellt wird, daß die Verweildauer eines Partikels des Produktgemisches in dem Reaktor während der er von dem Einlaß (12) zu dem Auslaß (14) vorgeschoben wird, zumindest näherungsweise einer vorbestimmten Fermentationszeit des Produktgemisches entspricht,

wobei die Drehgeschwindigkeit der Förderschnekke (20) entsprechend dem Minimum zweier Drehgeschwindigkeiten gemäß folgender Formel eingestellt wird:

$$w = \min\{w_1, w_2\}$$

wobei $w_1$ der Drehgeschwindigkeit der Förderschnecke (20) nach Maßgabe durch die vorbestimmte Fermentationszeit des Produktgemisches entspricht;

und $w_2$ einer Drehgeschwindigkeit der Förderschnecke (20) entspricht, welche so gering ist, daß eine Traktion des Produktgemisches an den Blättern der Förderschnecke (20) vernachlässigbar ist und im wesentlichen nur der gewünschte Vorschub des Produktgemisches erzielt wird.

2. Verfahren nach Anspruch 1, **dadurch gekennzeichnet, daß** dem Reaktor über den Einlaß (12) in Abhängigkeit der eingestellten Drehgeschwindigkeit der Förderschnecke (20) nur ein derartiges Volumen des Produktgemisches pro Zeiteinheit zugeführt wird, welches näherungsweise der Hälfte des von der Förderschnecke (20) maximal pro Zeiteinheit vorschiebbaren Volumens entspricht.

3. Reaktor zum kontinuierlichen Bearbeiten eines Produktgemisches, insbesondere eines Teiges, umfassend ein Gehäuse (10) mit einem Einlaß (12) und einem Auslaß (14) und einer in dem Gehäuse (10) drehbar gelagerten Förderschnecke (20) zum Vorschieben des Produktgemisches von dem Einlaß (12) zu dem Auslaß (14), wobei der Reaktor derart zum Einstellen der Drehgeschwindigkeit der Förderschnecke (20) in Abhängigkeit von der Steigung der Förderschnecke (20) und der Länge des Gehäuses (10) eingerichtet ist, daß ein Partikel des Produktgemisches während der gewünschten Fermentationszeit in dem Reaktor verbleibt, **dadurch gekennzeichnet, daß** die Drehgeschwindigkeit der Förderschnecke (20) auf einen so geringen Wert einstellbar ist, daß eine Traktion des Produktgemisches vernachlässigbar ist und im wesentlichen nur der gewünschte Vorschub des Produktgemisches erzielbar ist.

4. Reaktor nach Anspruch 3, **dadurch gekennzeichnet, daß** das Gehäuse (10) zumindest abschnittsweise kühlbar oder beheizbar ausgebildet ist.

5. Reaktor nach Anspruch 3 oder 4, **dadurch gekennzeichnet, daß** das Gehäuse (10) doppelwandig als Wärmetauscher ausgebildet ist.

6. Reaktor nach einem der vorhergehenden Ansprüche, **dadurch gekennzeichnet, daß** die Förderschnecke (20) eine, insbesondere mehrgängige, archimedische Schraube ist.

7. Produktionslinie zum kontinuierlichen Herstellen eines Produktgemisches, insbesondere eines Teiges, umfassend:

Misch- und/oder Kneteinrichtungen zum Herstellen des Produktgemisches; und den Reaktor gemäß einem der Ansprüche 3 bis 6 zum Fermentieren des Produktgemisches.

## Claims

1. Method for operating a reactor for the continuous treatment of a product mixture, in particular a dough, wherein the reactor is constructed as a housing (10) having an inlet (12) and an outlet (14) and a conveying screw (20) mounted rotatably in the housing (10) for pushing the product mixture forward from the inlet (12) to the outlet (14),

wherein the speed of rotation of the conveying screw (20) is set so that the residence time of a particle of the product mixture in the reactor while it is pushed forward from the inlet (12) to the outlet (14) corresponds at least approximately to a predetermined fermentation time of the product mixture,

wherein the speed of rotation of the conveying screw (20) is set in accordance with the minimum of two speeds of rotation according to the following formula:

$$w = \min\{w_1, w_2\}$$

where $w_1$ corresponds to the speed of rotation of the conveying screw (20) as required by the predetermined fermentation time of the product mixture, and $w_2$ corresponds to a speed of rotation of the conveying screw (20) which is so low that traction of the product mixture on the blades of the conveying screw (20) is negligible and substantially only the desired advancement of the product mixture is achieved.

2. Method according to claim 1, **characterised in that** only such a volume of product mixture is fed per unit time to the reactor via the inlet (12) as a function of the set speed of rotation of the conveying screw (20) that corresponds approximately to half of the maximum volume which can be pushed forward by the conveying screw (20) per unit time.

3.  Reactor for the continuous treatment of a product mixture, in particular a dough, comprising a housing (10) having an inlet (12) and an outlet (14) and a conveying screw (20) mounted rotatably in the housing (10) for pushing the product mixture forward from the inlet (12) to the outlet (14), wherein the reactor is set up in such a way for setting the speed of rotation of the conveying screw (20) as a function of the gradient of the conveying screw (20) and the length of the housing (10) that a particle of the product mixture remains in the reactor for the desired fermentation time, **characterised in that** the speed of rotation of the conveying screw (20) is adjustable to such a low value that traction of the product mixture is negligible and substantially only the desired advancement of the product mixture is achievable.

4.  Reactor according to claim 3, **characterised in that** the housing (10) at least in sections is of coolable or heatable construction.

5.  Reactor according to claim 3 or 4, **characterised in that** the housing (10) is constructed as a heat exchanger with double walls.

6.  Reactor according to one of the preceding claims, **characterised in that** the conveying screw (20) is in particular a multiple-flighted, Archimedean screw.

7.  Production line for the continuous production of a product mixture, in particular a dough, comprising mixing and/or kneading equipment for producing the product mixture and the reactor according to one of claims 3 to 6 for fermenting the product mixture.

**Revendications**

1.  Procédé de fonctionnement d'un réacteur de traitement en continu d'un mélange de produits, notamment d'une pâte, le réacteur étant formé comme un carter (10) comprenant une entrée (12) et une sortie (14) et un transporteur à vis sans fin (20), logé de manière rotative dans le carter (10), et destiné à pousser le mélange de produits de l'entrée (12) à la sortie (14),

la vitesse de rotation du transporteur à vis sans fin (20) étant réglée de sorte que le temps de séjour d'une particule du mélange de produits dans le réacteur pendant lequel elle est poussée de l'entrée (12) à la sortie (14) correspond au moins approximativement à un temps de fermentation prédéfini du mélange de produits,

la vitesse de rotation du transporteur à vis sans fin (20) étant réglée en fonction du minimum de deux vitesses de rotation selon la formule suivante :

$$w = \min\{w1, w2\}$$

où w1 correspondant à la vitesse de rotation du transporteur à vis sans fin (20) selon le temps de fermentation prédéfini du mélange de produits ;

et où w2 correspondant à une vitesse de rotation du transporteur à vis sans fin (20), laquelle est si basse qu'une traction du mélange de produits sur les lames du transporteur à vis sans fin (20) est négligeable et sensiblement seule la poussée souhaitée du mélange de produits est obtenue.

2.  Procédé selon la revendication 1, **caractérisé en ce que** seul un volume du mélange de produit est amené par unité de temps au réacteur en passant par l'entrée (12) en fonction de la vitesse de rotation réglée du transporteur à vis sans fin (20), lequel volume correspond approximativement à la moitié du volume pouvant être poussé au maximum par unité de temps par le transporteur à vis sans fin (20).

3.  Réacteur de traitement en continu d'un mélange de produits, notamment d'une pâte, comportant un carter (10) comprenant une entrée (12) et une sortie (14) et un transporteur à vis sans fin (20) logé de manière rotative dans le carter (10), destiné à pousser le mélange de produits de l'entrée (12) à la sortie (14), le réacteur étant configuré pour régler la vitesse de rotation du transporteur à vis sans fin (20) en fonction de la pente du transporteur à vis sans fin (20) et de la longueur du carter (10), de telle sorte qu'une particule du mélange de produits reste dans le réacteur pendant le temps de fermentation souhaité, **caractérisé en ce que** la vitesse de rotation du transporteur à vis sans fin (20) peut être réglée sur une valeur peu élevée, de sorte qu'une traction du mélange de produits est négligeable et que sensiblement seule la poussée souhaitée du mélange de produit peut être obtenue.

4.  Réacteur selon la revendication 3, **caractérisé en ce que** le carter (10) est conçu de façon à pouvoir être refroidi ou chauffé au moins par sections.

5.  Réacteur selon la revendication 3 ou 4, **caractérisé en ce que** le carter (10) est conçu à paroi double comme un échangeur de chaleur.

**6.** Réacteur selon l'une quelconque des revendications précédentes, **caractérisé en ce que** le transporteur à vis sans fin (20) est une vis d'Archimède, notamment à plusieurs filets.

**7.** Chaîne de production destinée à la fabrication continue d'un mélange de produits, notamment d'une pâte, comportant :

> des systèmes de mélange et/ou de pétrissage destinés à fabriquer le mélange de produits ; et le réacteur selon l'une des revendications 3 à 6 destiné à la fermentation du mélange de produits.

Fig.1